# EUROPÄISCHE PATENTSCHRIFT

(11) **EP 0 576 769 B1**
(45) Veröffentlichungstag und Bekanntmachung des Hinweises auf die Patenterteilung: **02.05.1997**
(21) Anmeldenummer: 92810497.5
(22) Anmeldetag: 29.06.1992
(51) Int. Cl.: G03B 27/62

(54) **Verfahren und Vorrichtung zur Bearbeitung von Streifen eines fotografischen Bandmaterials**
Method and device for treating strips of photographic web material
Méthode et dispositif pour le traitement de sections d'un ruban photographique

(43) Veröffentlichungstag der Anmeldung: 05.01.1994
(73) Patentinhaber: GRETAG IMAGING AG, CH-8105 Regensdorf (CH)
(72) Erfinder: BINDER, Erich, CH 8107 Buchs (CH); KUNZ, Jürg, CH 8180 Bülach (CH)
(74) Vertreter: Schwabe - Sandmair - Marx

(56) Entgegenhaltungen:
- EP-A- 0 159 419
- DE-A- 3 420 311
- DE-A- 3 426 503
- DE-A- 4 114 343
- US-A- 4 659 213

## Beschreibung

Die Erfindung betrifft ein Verfahren und eine Vorrichtung zur Bearbeitung von Streifen eines fotografischen Bandmaterials gemäss dem Oberbegriff des unabhängigen Patentanspruchs der jeweiligen Kategorie.

Bearbeitungsverfahren für Streifen eines fotografischen Bandmaterials, wie beispielsweise Negativfilmstreifen, und die dazugehörigen Vorrichtungen sind in vielen Varianten in den Fotolabors heutzutage im Einsatz. Mit ihrer Hilfe ist je nach Typ eine mehr oder weniger automatisierte Bearbeitung der Kundenaufträge möglich. Insbesondere ist dies auch bei den sogenannten Nachbestellungsaufträgen wünschenswert, bei denen die entsprechenden Kopiervorlagen schon in Form von geschnittenen Negativfilmstreifen vorliegen. Ein hoher Grad an Automatisierung ist hier insofern von Vorteil, als einerseits die Effizienz, also die zu bearbeitende Anzahl an Negativen pro Zeiteinheit, erhöht werden kann, und um andererseits eine hohe Zuverlässigkeit bei der Bearbeitung der Negative zu gewährleisten.

Ein Verfahren und eine entsprechende Vorrichtung zur Bearbeitung solcher Filmstreifen ist beispielsweise aus der US 4,659,213 bekannt. Dort wird der im Bereich des Seitenrands des Filmstreifens aufgebrachte Bar-Code (DX-Code) gelesen. Anhand der Lage des DX-Codes am oberen oder unteren Seitenrand der Filmstreifens einerseits und anhand der gelesenen Sequenz andererseits wird dann festgestellt, ob der Filmstreifen sich in der gewünschten Lage befindet, also beispielsweise ob sich die Beschichtungsseite (die Seite, auf der die lichtempfindliche Emulsion aufgebracht ist) oben oder unten befindet. Ferner wird festgestellt, ob sich die Bildfelder des Filmstreifens in der "aufrechten" Lage befinden. Es kann weiterhin festgestellt werden, dass sich der Filmstreifen zwar auf der korrekten Beschichtungsseite befindet, aber das Bildfeld "auf dem Kopf steht", dass der Filmstreifen sich zwar auf der falschen Beschichtungsseite befindet, aber das Bildfeld sich in "aufrechter" Lage befindet, oder dass sowohl der Filmstreifen sich auf der falschen Beschichtungsseite befindet als auch das Bildfeld "auf dem Kopf steht".

Insbesondere in den Fällen, in denen die Beschichtungsseite des Filmstreifens sich nicht in der gewünschten Lage befindet (beispielsweise Beschichtungsseite unten statt oben), muss der automatische Bearbeitungsvorgang unterbrochen werden, und das Operationspersonal muss den entsprechenden Filmstreifen wenden, bevor dieser Filmstreifen der weiteren Bearbeitung zugeführt werden kann. Dies hat eine erhebliche Verringerung der Effizienz bei der Bearbeitung solcher Filmstreifen zur Folge, da das Anhalten des Geräts, das Herausnehmen des betroffenen Filmstreifens, das Wiedereinfädeln des Filmstreifens etc. und das Wiederanfahren des Geräts doch einen recht erheblichen Zeitraum in Anspruch nehmen, während dem keine Bearbeitung anderer Filmstreifen möglich ist, da das Gerät stillsteht. Dies ist gleichbedeutend mit einem entsprechenden Effizienzverlust.

Aus der EP-A-0 159 419 ist ferner ein Kopiergerät bekannt, bei dem eine Kopiervorlage (Originaldokument) automatisch gewendet werden kann, falls sie doppelseitig ist und die Rückseite kopiert werden soll oder falls sowohl die Vorder- als auch die Rückseite kopiert werden sollen.

Ausgehend von dem erstgenannten Stand der Technik ist es eine Aufgabe der Erfindung, die Effizienz des Bearbeitungsverfahrens bzw. des betreffenden Geräts zu steigern.

Verfahrensmässig wird diese Aufgabe dadurch gelöst, dass in einem ersten Fall, in welchem die Lage der Seite mit der beschichteten Oberfläche der gewünschten Lage entspricht, der Streifen unverändert der weiteren Bearbeitung zugeführt wird und dass in einem zweiten Fall, in welchem die Lage der Seite mit der beschichteten Oberfläche nicht der gewünschten Lage entspricht, der zu bearbeitende Streifen vor seiner weiteren Bearbeitung automatisch gewendet wird. Durch das automatische Wenden des betroffenen Filmstreifens muss der Bearbeitungsvorgang nicht in der bereits erläuterten zeitaufwendigen Art und Weise unterbrochen werden, der Filmstreifen herausgenommen, gewendet und anschliessend wieder eingefädelt werden. Dieses Wenden und Wiedereinfädeln des Films erfolgt vollautomatisch und wenig zeitaufwendig sowie in hohem Masse zuverlässig, so dass auf diese Weise eine erhebliche Zeitersparnis und damit eine Effizienzerhöhung erzielt werden kann. Der zu wendende Streifen wird zu diesem Zweck mit seinem einen Ende voraus in eine Wendestation hinein geleitet. Diese Wendestation umfasst einen sich im wesentlichen entgegengesetzt zur Transportrichtung des Streifens erstreckenden Wendekanal, in den hinein der zu wendende Streifen geführt wird. Nach seinem Einführen in diesen Wendekanal wird der Streifen mit seinem anderen Ende voraus wieder aus dem Wendekanal herausgeführt und der weiteren Bearbeitung zugeführt. So wird der Filmstreifen auf einfache und zuverlässige Art und Weise gewendet, wobei der Zeitaufwand für das Wenden des Films vergleichsweise sehr gering ist.

Um weiterhin die Effizienz des Verfahrens zu erhöhen, werden Streifen für den Fall, dass sie überhaupt nicht weiter bearbeitet werden müssen, beispielsweise weil von den Negativen des betroffenen Filmstreifens keine Abzüge vom Kunden gewünscht worden sind, in den Wendekanal geleitet und ausgeschieden. Durch das Aussortieren und Ausscheiden solcher Filmstreifen verzögern diese Filmstreifen auch die Bearbeitung weiterer Filmstreifen nicht weiter, von deren Negativen Abzüge erstellt werden sollen.

Das Detektieren der Lage der Beschichtungsseite des Films kann beispielsweise mit Hilfe eines im Randbereich des Streifens vorgesehenen Bar-Codes (DX-Code), der gelesen wird, erfolgen.

Vorrichtungsmässig wird die Aufgabe dadurch gelöst, dass eine Weiche vorgesehen ist, die in einem ersten Fall, in welchem die Lage der Seite mit der beschichteten Oberfläche der gewünschten Lage entspricht, den Streifen unverändert der weiteren Berabeitung zuführt, und die in einem zweiten Fall, in welchem die Lage der Seite mit der beschichteten Oberfläche nicht der gewünschten Lage entspricht, den Streifen vor der weiteren Bearbeitung automatisch einer Wendeeinrichtung zuführt. Dies gewährleistet eine besonders effiziente Bearbeitung der Filmstreifen: Filmstreifen, deren Beschichtungsseite sich in der gewünschten Lage befindet, werden direkt der weiteren Bearbeitung zugeführt. Filmstreifen, deren Beschichtungsseite sich nicht in der gewünschten Lage befindet, führt die Weiche automatisch einer Wendeeinrichtung zu. Dort wird der betroffene Filmstreifen gewendet und kann dann weiter bearbeitet werden. Durch das automatische Wenden des betroffenen Filmstreifens muss der Bearbeitungsvorgang nicht in der bereits erläuterten zeitaufwendigen Art und Weise unterbrochen werden, der Filmstreifen herausgenommen, gewendet und anschliessend wieder eingefädelt werden. Dieses Wenden und Wiedereinfädeln des Films erfolgt vollautomatisch und wenig zeitaufwendig sowie in hohem Masse zuverlässig, so dass auf diese Weise eine erhebliche Zeitersparnis und damit eine Effizienzerhöhung erzielt werden kann. Die Wendeeinrichtung umfasst zu diesem Zweck einen sich im wesentlichen entgegengesetzt zur Transportrichtung des Streifens erstreckenden Wendekanal. In diesen Wendekanal führt die Weiche einen zu wendenden Streifen mit seinem einen Ende voraus hinein. Anschliessend führt sie den Streifen mit seinem anderen Ende voraus aus dem Wendekanal wieder heraus und der weiteren Bearbeitung zu. So wird der Filmstreifen auf einfache und zuverlässige Art und Weise gewendet, wobei der Zeitaufwand für das Wenden des Films vergleichsweise sehr gering ist.

Bei einer Ausgestaltung der erfindungsgemässen Vorrichtung sind zum Transport des Streifens Walzenpaare vorgesehen, zwischen denen der Streifen hindurchgeführt ist. Zur Führung der Streifen sind Leitbleche vorgesehen, wobei die Weiche Leitbleche und ein Transportwalzenpaar sowie eine Scheibe umfasst, an der die Leitbleche der Weiche befestigt sind. Die Scheibe ist koaxial zur Drechachse einer Tranportwalze des Transportwalzenpaars der Weiche angeordnet und mitsamt den an ihr befestigten Leitblechen und mitsamt der anderen zu diesem Transportwalzenpaar gehörenden Transportwalze um die Scheibenachse zwischen zwei Endpositionen drehbar. In der ersten Endposition der Scheibe führen die Leitbleche den Streifen ungewendet weiter, in der zweiten Endposition hingegen führen die Leitbleche den Streifen in den Wendekanal hinein. Diese Ausgestaltung der erfindungsgemässen Vorrichtung zeichnet sich durch geringen Aufwand und gleichzeitig durch eine hohe Zuverlässigkeit aus.

Bei einer Weiterbildung der Vorrichtung sind ein weiteres Transportwalzenpaar und ein weiteres Leitblech der Weiche nachfolgend angeordnet. Dieses weitere Leitblech ist koaxial zur Drechachse einer Transportwalze dieses Transportwalzenpaars zwischen zwei Endpositionen schwenkbar und führt in der ersten Endposition den von der Weiche ungewendet kommenden Streifen und in der zweiten Endposition den aus dem Wendekanal kommenden Streifen der weiteren Bearbeitung zu. Auch diese Weiterbildung zeichnet sich durch geringen Aufwand bei gleichzeitig hoher Zuverlässigkeit aus.

Bei einer vorteilhaften Ausgestaltung der erfindungsgemässen Vorrichtung sind in der Nähe des Eintritts des Streifens in die Vorrichtung an beiden Seitenrändern der Transportbahn Lesemittel vorgesehen sind, die anhand eines gelesenen Barcodes auf dem Seitenrand des Streifens gegebenenfalls ein Wendesignal erzeugen und dieses an die Weiche bzw. an die Antriebs- und Stellmotoren leiten. Durch das Lesen des Barcodes kann auf einfache Weise ermittelt werden, ob der Film gewendet werden muss vor der weiteren Bearbeitung oder nicht und es kann sofort das entsprechende Signal an die Weiche geleitet werden. Dies bedeutet eine weitere Erhöhung der Effizienz des Geräts.

In einer weiteren Ausgestaltung der Vorrichtung erzeugen in dem Fall, dass ein Streifen nicht bearbeitet werden muss, die Lesemittel ein Ausscheidesignal und leiten dieses an die Weiche bzw. an die Antriebs- und Stellmotoren, so dass der Streifen dann in den Wendekanal zum Ausscheiden geführt wird. Durch das Aussortieren und Ausscheiden solcher Filmstreifen verzögern diese Filmstreifen auch die Bearbeitung weiterer Filmstreifen nicht weiter, von deren Negativen Abzüge erstellt werden sollen.

Bei einer weiteren Ausgestaltung der erfindungsgemässen Vorrichtung sind direkt am Eintritt des Streifens Detektionsmittel angeordnet, die den eintretenden Streifen detektieren und ein Antriebssignal für die Antriebsmotoren der Transportwalzen erzeugen. Dadurch wird erreicht, dass die Transportwalzen wirklich nur dann angetrieben werden, wenn auch tatsächlich zu bearbeitende Streifen zugeführt werden, so dass für den-Fall von Pausen bei der Bearbeitung doch ein merklicher Beitrag an Energie eingespart werden kann und ausserdem der Verschleiss der einzelnen Geräteteile geringer ist.

Im folgenden wird die Erfindung anhand der Zeichnung näher erläutert Es zeigen:
- Fig. 1: eine schematische Anordnung von wesentlichen Teilen eines Ausführungsbeispiels der erfindungsgemässen Vorrichtung,
- Fig. 2: den Ausschnitt II der Fig. 1 in einer ersten Stellung, in welcher der ankommende Streifen nicht umgelenkt wird,
- Fig. 3: den Ausschnitt II der Fig. 1 in einer weiteren Stellung, in welcher der ankommende Streifen in den Wendekanal umgelenkt wird,
- Fig. 4: die Anordnung aus Fig. 1, wobei der Streifen in den Wendekanal hineingeführt ist,
- Fig. 5: den Ausschnitt II der Fig. 1 in einer weiteren Stellung, in welcher der in den Wendekanal hineingeführte Streifen wieder aus diesem heraus geführt wird,
- Fig. 6: ein Ausführungsbeispiel der Weiche der erfindungsgemässen Vorrichtung in einer Stellung, in welcher der ankommende Streifen nicht umgelenkt wird,
- Fig. 7: die Weiche der Fig. 6 in einer Stellung, in der der in dem Wendekanal gewendete Streifen wieder aus diesem herausgeführt wird,
- Fig. 8: die Aufsicht VIII der Fig. 6,
- Fig. 9: die Aufsicht IX-IX der Fig. 6,
- Fig. 10: den Schnitt X-X der Fig. 6,
- Fig. 11: den Schnitt XI-XI der Fig. 6
und
- Fig. 12: den Schnitt XII-XII der Fig. 6.

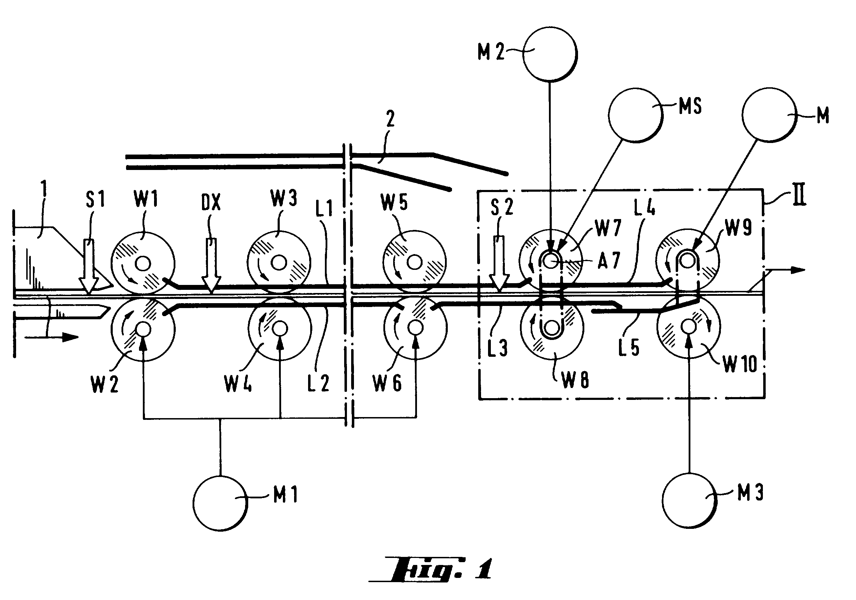

Eine schematische Anordnung der wesentlichen Teile eines Ausführungsbeispiels der erfindungsgemässen Vorrichtung, wie sie in Fig. 1 dargestelllt ist, umfasst einen Einlass 1 für einen Streifen eines zu bearbeitenden fotografischen Bandmaterials, beispielsweise eines Negativfilmstreifens F. Man erkennt ferner mehrere Transportwalzenpaare W1 und W2, W3 und W4, W5 und W6, W7 und W8, sowie W9 und W10, zwischen denen der Filmstreifen F hindurchgeführt wird und die den Filmstreifen F transportieren. Angetrieben werden diese Transportwalzen von den Motoren M1,M2 und M3. Vorgesehen ist ferner noch ein Stellmotor MS. Zur Führung des Filmstreifens F sind mehrere Leitbleche L1,L2,L3,L4,L5 vorgesehen. Ausserdem ist ein Wendekanal 2 vorgesehen, in den hinein ein zu wendender Filmstreifen F hineingeführt werden kann. Darüberhinaus sind noch zwei Sensoren S1 und S2 sowie ein DX-Codeleser DX jeweils durch einen entsprechenden Pfeil symbolisch angedeutet.

Im folgenden soll zunächst anhand der schematischen Darstellungen in Fig. 1 bis Fig. 5 die prinzipielle Funktionsweise der Vorrichtung erläutert werden. Anschliessend wird anhand der diesen Figuren nachfolgenden Figuren eine konkretere Ausgestaltung der Vorrichtung erläutert.

Gemäss Fig. 1 tritt der zu bearbeitende Filmstreifen F durch den Einlass 1 ein. Der Sensor S1 detektiert, dass ein Streifen F eintritt und erzeugt ein Antriebssignal, das von eine Steuerelektronik (nicht dargestellt) zum Antriebsmotor M1 geleitet wird , der die Transportwalzen W1 bis W6 synchron antreibt. Der Streifen F wird somit zunächst durch das erste Walzenpaar W1 und W2 hindurch geführt. Dann wird mit Hilfe von Lesemitteln, hier in Form eines DX-Code-Lesers DX, der DX-Code des Filmstreifens F gelesen. Anschliessend wird in bekannter Art und Weise, beispielsweise so, wie es in der eingangs genannten US 4,659,213 beschrieben ist, festgestellt, ob die Lage der Beschichtungs- oder Schichtseite des Streifens F korrekt ist. Falls die Lage korrekt ist, kann der Streifen F ungewendet der weiteren Bearbeitung zugeführt werden. Andernfalls kann er innerhalb der Transportebene um 180° gedreht werden, also wenn der Streifen F lediglich seitenverkehrt eingelaufen ist, die Lage der Schichtseite des Streifens F aber korrekt ist. Bei dem beschriebenen Ausführungsbeispiel ist aber ein solches Drehen des Streifens F um 180° in der Transportebene nicht vorgesehen.

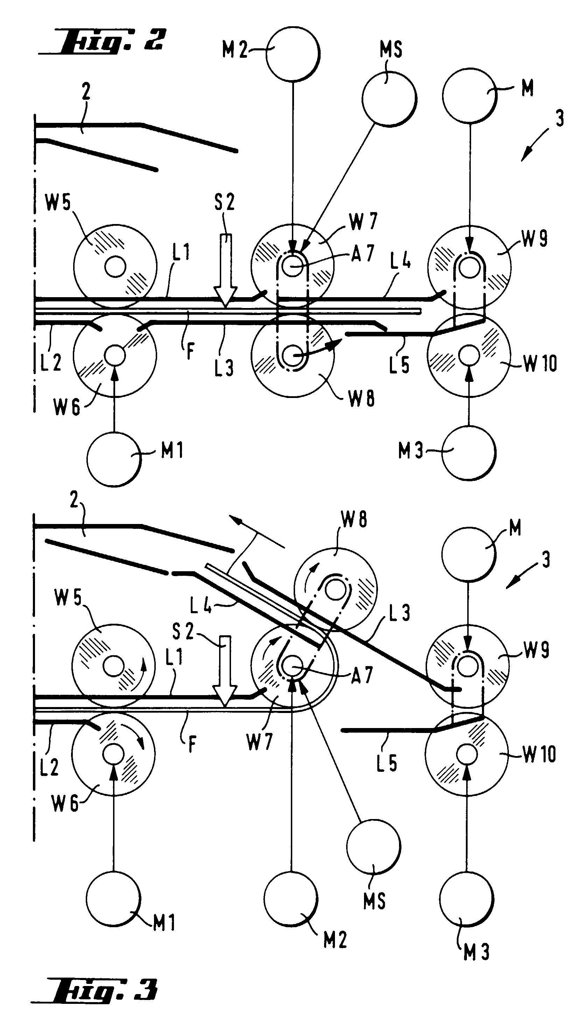

In Fig. 2 ist ein Ausschnitt II aus der Fig. 1 vergrössert dargestellt, aus dem man erkennen kann, dass in dieser Stellung der Leitbleche L3, L4 und L5 ein ankommender Filmstreifen F nicht in den Wendekanal 2 umgelenkt wird, also Lage der Schichtseite korrekt ist. Die in Fig. 2 gezeigte Position des Films entspricht der Ausgangsstellung zum Wenden. Der Sensor S2 detektiert den Streifen F und erzeugt ein entsprechendes Signal an die Steuerelektronik (nicht dargestellt). Da der Streifen F aber nicht gewendet werden soll, wird er mit Hilfe des Antriebsmotors M2 dann unverändert der weiteren Bearbeitung zugeführt. Dabei treibt der Motor M2 das Walzenpaar W7,W8 synchron zu den Walzen W1 bis W6 an.

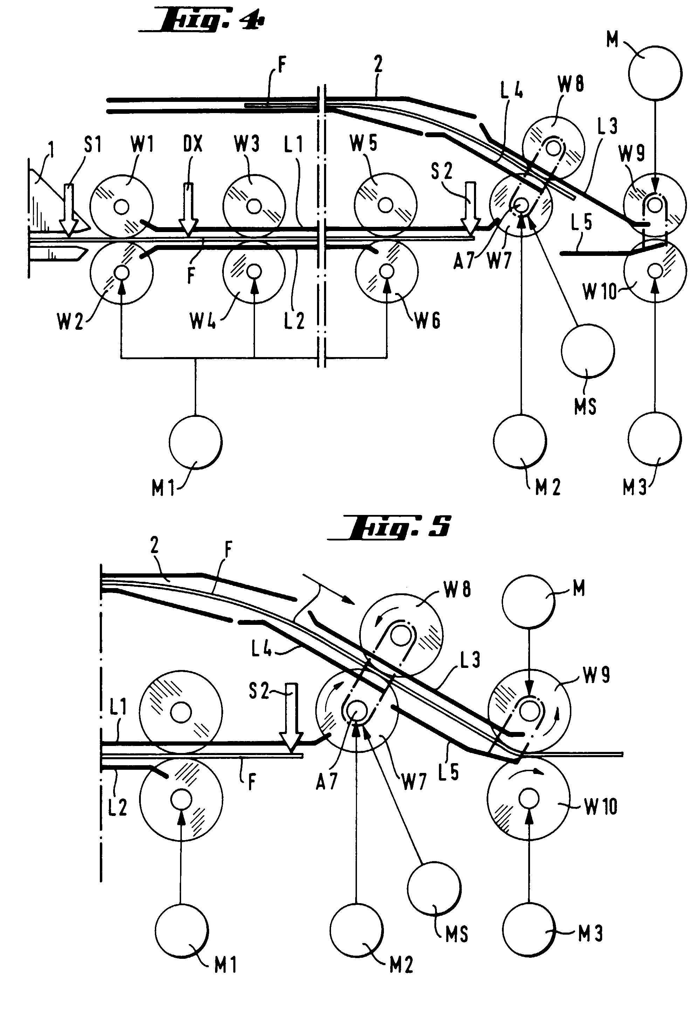

In Fig. 3 hingegen, in der der Ausschnitt II der Fig. 1 mit den Leitblechen L3, L4 und L5 in einer anderen Position dargestellt ist, erkennt man, dass der ankommende Filmstreifen F in den Wendekanal 2 hinein umgelenkt wird. Die Transportwalze W8 ist zu diesem Zweck mitsamt dem Leitblech L3 um die Achse A7 der Walze W7 schwenkbar. Nachdem der Streifen zwischen die Walzen W7 und W8 eingelaufen ist, wird die Walze W8 mitsamt dem eingeklemmten Streifen F mit Hilfe des Stellmotors MS um die Achse A7 der Walze W7 geschwenkt. Der Streifen F wird anschliessend mit Hilfe des Motors M2 in den Wendekanal 2 hineingeführt.

Betrachtet man die Fig. 4, so erkennt man, dass der zu wendende Streifen F grösstenteils in den Wendekanal 2 hinein eingelaufen ist. Dadurch, dass der Wendekanal im wesentlichen entgegengesetzt zur Transportrichtung angeordnet ist, kommt der Filmstreifen F auf seiner anderen Seite zu liegen, er ist also durch dieses Hineinführen in den Wendekanal 2 gewendet worden. Soll dieser Filmstreifen überhaupt nicht weiter bearbeitet werden, liegen also beispielsweise keine Bestellungen für Kopien von den Negativen des betreffenden Streifens vor, so kann der betreffende Streifen F auch vollständig in den Wendekanal 2 hineingeführt und ausgeschieden werden. Dies bedeutet eine zusätzliche Effizienzsteigerung, da dieser Streifen nicht die nachfolgenden Bearbeitungsstationen durchlaufen muss, ohne jedoch bearbeitet zu werden. Eine weitere Möglichkeit zur Effizienzsteigerung ist ebenfalls aus der Fig. 4 erkennbar: Befindet sich der Streifen F im Wendekanal 2 und muss entweder aus diesem heraus der weiteren Bearbeitung zugeführt werden oder ausgeschieden werden, so kann in der Zwischenzeit bereits der nächste Streifen bis kurz vor die Walze W7 quasi in eine Warteposition transportiert werden. Dies ist möglich, weil die Antriebsmotoren M1 und M2 voneinander prinzipiell unabhängig arbeiten können.

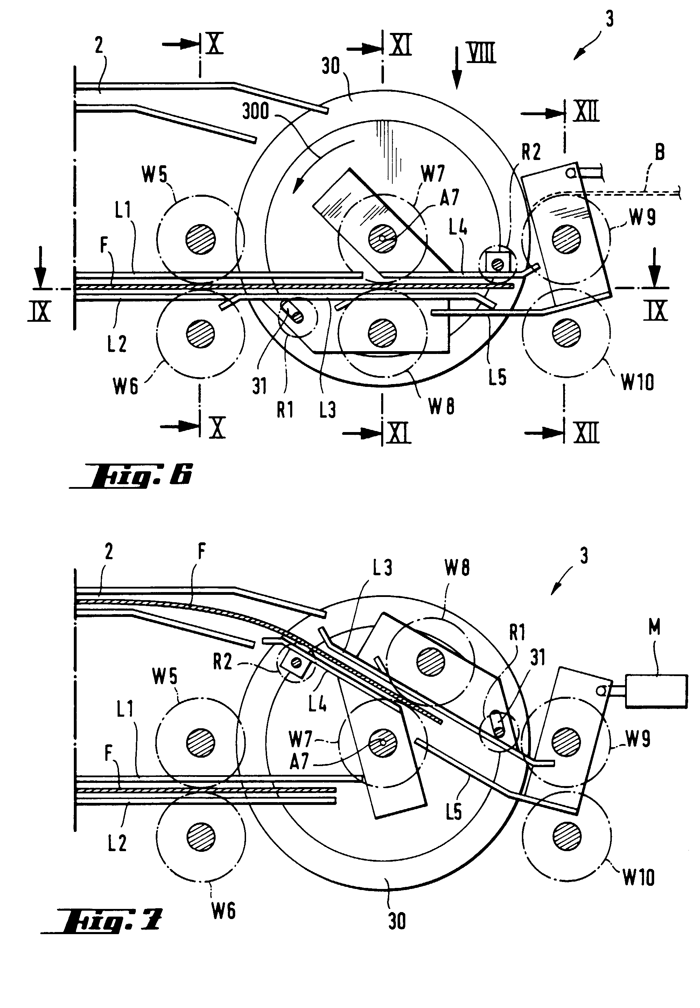

In Fig. 5 ist schliesslich dargestellt, wie der in den Wendekanal 2 grösstenteils eingelaufene und gewendete Streifen F wieder aus dem Wendekanal 2 herausgeführt und den nachfolgenden Bearbeitungsstationen zugeführt wird. Zu diesem Zweck wird das Leitblech L5 ebenfalls aus seiner Ruheposition ausgeschwenkt. Dieses Ausschwenken des Leitblechs L5 kann beispielsweise mit Hilfe eines Elektromagneten M erfolgen, der das entsprechende Leitblech bzw. einen mit diesem Leitblech L5 verbundenen Flansch anzieht und es so ausschwenkt. Dies ist in Fig. 5 ebenfalls schematisch angedeutet. Der Streifen F kann nun aus dem Wendekanal 2 heraus mit Hilfe eines Antriebssignals der Steuerelektronik an den Motor M3, der dann synchron mit dem Motor M2 das Walzenpaar W9,W10 antreibt, der weiteren Bearbeitung zugeführt werden.

Wie bereits erläutert, kann zur Effizienzsteigerung ermittelt werden, ob ein in die Vorrichtung eintretenden Streifen F überhaupt mindestens ein Negativ umfasst, von dem ein Abzug erstellt werden soll. Ansonsten kann der betroffene Streifen nämlich ausgeschieden werden und braucht der weiteren Bearbeitung nicht zugeführt werden. Für diese Ermittlung kann das Lesen des DX-Codes mit Hilfe des DX-Code-Lesers DX bzw. eine Negativzählung mit Hilfe des Sensors S1 genutzt werden. Dies kann beispielsweise folgendermassen geschehen:

Für den Fall, dass es sich bei dem DX-Code um einen sogenannten "Extended DX-Code" handelt, sodass also der DX-Code eine Information über die Nummern der Negative enthält, liest der DX-Code-Leser DX diesen erweiterten DX-Code und vergleicht die Nummern der Negative des Filmstreifens mit den Eingaben des Operationspersonals, von welchen Negativen Abzüge erstellt werden sollen. Enthält der Filmstreifen F kein Negativ, von dem ein Abzug erstellt werden soll, so kann dieser Streifen in der bereits erläuterten Weise in den Wendekanal 2 hineingeführt und ausgeschieden werden.

Für den Fall, dass es sich bei dem DX-Code nicht um einen "Extended DX-Code" handelt, aber dem Gerät vom Operationspersonal mitgeteilt wurde, welches Negativ mit welcher Nummer sich am Anfang des Filmstreifens F befindet und ob die folgenden Negativnummern auf- oder absteigend sind und ferner dem Gerät vom Operationspersonal mitgeteilt wurde, von welchen Negativen Abzüge erstellt werden sollen, dann kann mit Hilfe des Sensors S1 und der Steuerelektronik eine Zählung der Negative erfolgen, sodass ebenfalls vom jeweils gewünschten Negativ ein oder mehrere Abzüge erstellt werden. Enthält der Filmstreifen F kein Negativ, von dem ein Abzug erstellt werden soll, so kann dieser Streifen in der bereits erläuterten Weise in den Wendekanal 2 hineingeführt und ausgeschieden werden.

Um dies auch für 135er Filme zu ermöglichen, sind bei dem beschriebenen Ausführungsbeispiel der Vorrichtung zwischen dem Walzenpaar W3,W4 und dem Walzenpaar W5,W6 noch vier weitere Walzenpaare vorgesehen, die aber aus Gründen der besseren Übersichtlichkeit hier nicht dargestellt worden sind. Streifen solcher 135er Filme können nämlich bis zu sechs Negative umfassen. Ist die Vorrichtung entsprechend ausgebildet, so kann der DX-Code über die gesamte Länge des Streifens gelesen werden. Dies ist insbesondere dann von besonderem Interesse, wenn einzelne DX-Codes schadhaft oder gar nicht mehr vorhanden sind, was beispielsweise durch Ausreissen, Verstanzen des Randbereichs etc. passiert sein kann. Wenn es aber, wie gerade erläutert, möglich ist, den DX-Code über die ganze Länge des Streifens zu lesen, kann diese Information wiedergewonnen werden und der Streifen doch noch der richtigen Verarbeitungsart (Ausscheiden oder Abzüge erstellen) zugeführt werden.

Anhand der folgenden Figuren (Fig. 6 bis Fig. 12) soll nun ein konkreteres Ausführungsbeispiel der erfindungsgemässen Vorrichtung erläutert werden, insbesondere soll die Weiche detaillierter erläutert werden, die entweder den Streifen F in den Wendekanal umlenkt oder nicht, je nachdem, ob der Streifen gewendet (oder ausgeschieden) werden soll oder nicht.

Zu diesem Zweck ist in Fig. 6 ein Ausführungsbeispiel einer solchen Weiche 3 dargestellt. Dabei wurde aus Symmetriegründen nur eine Hälfte der Weiche in einer Ansicht dargestellt. In Fig. 6 ist die Weiche 3 in einer ersten Endposition dargestellt, in der ein zu bearbeitender Streifen F nicht gewendet wird, sondern unverändert der weiteren Bearbeitung zugeführt wird. Diese in Fig. 6 gezeigte Position entspricht auch der Position, in der der Streifen F gehalten wird, bevor die Walze W8 und die Leitbleche L3 und L4 geschwenkt werden. Man erkennt, dass die Weiche 3 eine Scheibe 30 umfasst, deren Drehachse mit der Drehachse A7 der Walze W7 des Walzenpaars W7 und W8 zusammenfällt. Die andere Walze W8 dieses Walzenpaars ist zusammen mit den Leitblechen L3 und L4 um diese Achse A7 drehbar, indem sowohl die Walze W8 als auch die Leitbleche L3 und L4 an der Scheibe 30 befestigt sind. Ferner sind an den Leitblechen L3 und L4 bzw. an den Flanschen der Leitbleche L3 und L4 noch zwei Rollen R1 und R2 vorgesehen, die verhindern, dass sich der Filmstreifen F nach oben wölben kann und eventuell aus seiner Führung herausspringt. Auf die Wirkungsweise der Rollen R1 und R2 wird weiter unten noch gesondert eingegangen.

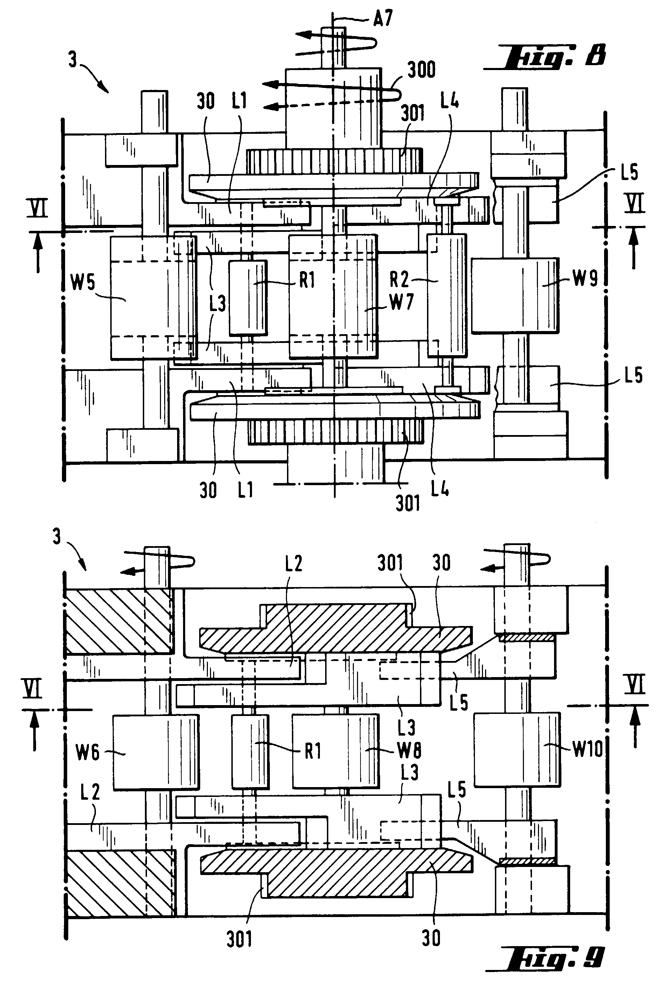

Die Ausgestaltung der Weiche 3 wird noch besser verständlich, wenn man die Fig. 8 und die Fig. 9 betrachtet, wobei die Fig. 8 einer Aufsicht gemäss dem Pfeil VIII der Fig. 6 entspricht ("obere" Hälfte der Weiche) und die Fig. 9 einer Ansicht gemäss der Linie IX-IX der Fig. 6 ("untere" Hälfte der Weiche). Man erkennt aus diesen Figuren besonders gut, dass die Transportwalzen konstruktiv bedingt eine unterschiedliche Breite haben, damit die Leitbleche L3 und L4 zusammen mit der Scheibe 30 um die Achse A7 gedreht werden können, ohne dass dabei diese Teile durch die Walze W9 bzw. durch das Leitblech L5 behindert werden. Dies soll anhand der Wirkungsweise der Weiche 3, die mit Hilfe der Fig. 7 im folgenden erläutert wird, noch deutlich gemacht werden.

Soll der Streifen F gewendet werden, so läuft der Streifen zunächst zwischen das Walzenpaar W7 und W8 ein (Fig. 6). Dann wird die Scheibe 30 gemäss der Darstellung in Fig. 7 gegen der Uhrzeigersinn um die Achse A7 in ihre zweite Endposition gedreht, in der der Streifen F in den Wendekanal 2 hineingeführt wird, wie bereits anhand der Fig. 3 und der Fig. 4 erläutert. Dabei ist zunächst das Leitblech L5 noch in der Ruheposition, wie es in Fig. 6 dargestellt ist.

Ist der Streifen F grösstenteils in den Wendekanal 2 eingelaufen (siehe Fig. 4), sodass sich dessen Ende kurz vor dem Walzenpaar W7,W8 befindet, so kann mit Hilfe des Elektromagneten M das Leitblech L5 in seine zweite Endposition (Fig. 7) bewegt werden, so dass anschliessend der in den Wendekanal 2 eingelaufene und gewendete Streifen F wieder sicher aus diesem herausgeführt werden kann und dann zwischen das Walzenpaar W9,W10 gelangt. In dieser zweiten Endposition ist die Weiche 3 in der Fig. 7 dargestellt. Die Tatsache, dass das Ende des Streifens F sich kurz vor dem Walzenpaar W7,W8 befindet, der Streifen F also wiet genug bis vor das Walzenpaar W7,W8 transportiert worden ist und das Leitblech 5 jetzt in seine zweite Endposition geschwenkt werden kann, kann beispielsweise mit Hilfe des Sensors S2 festgestellt werden. Dieser Sensor S2 erzeugt dann, wenn das hintere Ende des Streifens F den Sensor S2 passiert hat, ein Signal für den Motor M2, welcher den Streifen noch eine vorgegebene Weglänge transprotiert und dann stoppt. Jetzt kann der Elektromagnet M betätigt werden, der das Leitblech L5 in seine zweite Endposition bewegt.

Damit die Leitbleche L3, L4 und L5 aus der ersten Endposition der Weiche 3 (Fig. 6) in die zweite Endposition der Weiche 3 (Fig. 7) zusammen mit der Scheibe 30 gedreht werden können, müssen sie so ausgestaltet sein, dass sie sich beim Drehen der Scheibe 30 nicht behindern. Die Art und Weise der Ausgestaltung der Leitbleche, die ein solches Verdrehen der Scheibe 30 mitsamt den Leitblechen L3 und L4 ohne Behinderung ermöglichen, kann man gut aus der Fig. 9 entnehmen. Dabei wird die Scheibe 30 in Richtung des Pfeils 300 (Fig. 8) gedreht.. Diese Drehbewegung kann beispielsweise mit Hilfe eines Zahnrads 301, das mit der Scheibe 30 verbunden ist, und mit Hilfe des Stellmotors MS, erfolgen. Dies kann beispielsweise so erfolgen, dass der Stellmotor MS ebenfalls über ein Zahnrad verfügt, das in das Zahnrad 301 eingreift und es um eine vorgegebene Anzahl von Zähnen dreht.

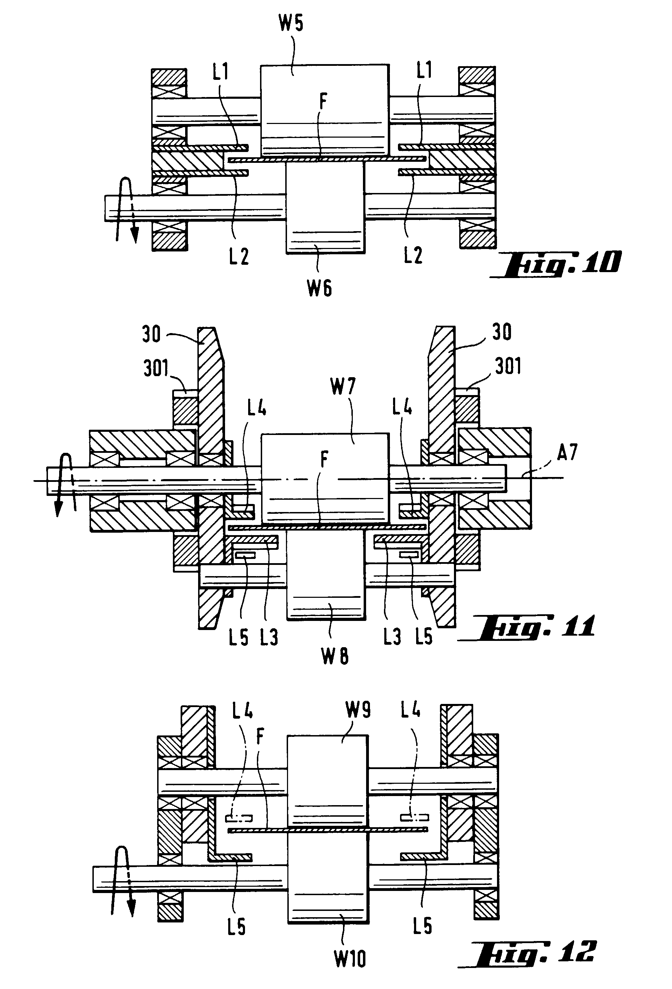

Schnitte entlang der Linien X-X, XI-XI und XII-XII sind in Fig. 10, Fig. 11 und Fig. 12 dargestellt. Aus diesen Figuren erkennt man ebenfalls gut, dass die Walzen der einzelnen Walzenpaare konstruktiv bedingt teilweise eine unterschiedliche Breite aufweisen. Ferner erkennt man auch, dass bei dem Walzenpaar W1,W2, dem Walzenpaar W3,W4, dem Walzenpaar W5,W6 sowie den nicht dargestellten anderen vier Walzenpaaren zwischen dem Walzenpaar W3,W4 und dem Walzenpaar W5,W6 jeweils die untere Walze angetrieben wird. Die Walzen werden dabei synchron angetrieben. Ebensogut könnte aber auch die obere Walze angetrieben werden. Beim Walzenpaar W7 und W8 wird die obere Walze W7 angetrieben, damit der Antriebsmotor M2 im Falle dass der Streifen F umgelenkt wird, nicht zusammen mit der Walze W8 geschwenkt werden muss. Prinzipiell wäre aber auch dies denkbar. Der Stellmotor MS, der die Scheibe 30 aus der ersten Endposition in die zweite Endposition bewegt, wirkt beisspielsweise mittels des Zahnrads 301 direkt auf die Scheibe 30, sodass auch er nicht geschwenkt werden muss. Bei dem Walzenpaar W9,W10 wird die untere Walze W10 mit Hilfe des Motors M3 angetrieben, wobei auch hier wieder ein Antrieb der oberen Walze W9 denkbar ist.

An dieser Stelle soll noch auf die beiden Rollen R1 und R2 (Fig. 6 bzw. Fig. 7) eingegangen werden, die ein Wölben des Streifens F quer zur Transportrichtung vermeiden. Die Rolle R1 ist nämlich in einem Langloch 31 gelagert, welches in dem Flansch des Leitblechs L3 vorgesehen ist, während die Rolle R2 nicht verschiebbar gelagert ist. In der ersten Position der Scheibe 30, in welcher der Streifen F nicht in den Wendekanal 2 hineingeführt wird, verhindert die Rolle R2 eine Wölbung des Streifens F nach oben (Fig. 6). Die Rolle R1 hat in dieser Position der Scheibe 30 keine Funktion.

Wird die Scheibe 30 hingegen in die Position gedreht, in der der Streifen in den Wendekanal 2 geführt wird, so rutscht die Rolle R1 in dem Langloch 31 bis zum unteren Ende des Langlochs 31, so dass sie es ist, die in dieser Position der Scheibe 30 die Wölbung des Streifens F nach oben vermeidet (Fig. 7) und nicht die Rolle R2 wie in der anderen Position der Scheibe 30 (Fig. 6). Die Rolle R2 hat in der Position der Scheibe 30, wie sie in Fig. 7 dargestellt ist, die Funktion einer Umlenkrolle für den Transport des Streifens F in den Wendekanal 2 hinein bzw. aus diesem heraus.

Hat der zu bearbeitende Streifen F die Weiche 3 passiert, ist er also gewendet worden oder auch nicht, so erfolgt anschliessend die weitere Bearbeitung des Streifens F. Da es bei heute üblichen Geräten weit verbreitet ist, aus vielen Streifen F gebildete lange Bänder zu bearbeiten, müssen die einzelnen Streifen F noch zu einem solchen Band zusammengefügt werden. Eine Möglichkeit, wie dieses Zusammenfügen erfolgen kann, ist in Fig. 6 angedeutet. Dort ist über die Walze W9 ein Klebeband B (strichliert) geführt. Dieses Klebeband B erstreckt sich dabei nur über einen Teil des Randbereichs der Filmstreifen F. Mit Hilfe dieses Klebebands B können aufeinanderfolgende Filmstreifen F auf diese Weise zu einem langen Band zusammengefügt werden.

## Patentansprüche

1. Verfahren zur Bearbeitung von Streifen (F) eines fotografischen Bandmaterials, deren eine Oberfläche zumindest teilweise beschichtet ist, bei welchem Verfahren die Lage der Seite mit der beschichteten Oberfläche ermittelt wird, wobei in einem ersten Fall, in welchem die Lage der Seite mit der beschichteten Oberfläche der gewünschten Lage entspricht, der Streifen unverändert der weiteren Bearbeitung zugeführt wird und wobei in einem zweiten Fall, in welchem die Lage der Seite mit der beschichteten Oberfläche nicht der gewünschten Lage entspricht, der zu bearbeitende Streifen vor seiner weiteren Bearbeitung gewendet wird, dadurch gekennzeichnet, dass im zweiten Fall der zu wendende Streifen (F) mit seinem einen Ende voraus in eine Wendestation hinein geleitet wird, welche einen sich im wesentlichen entgegengesetzt zur Transportrichtung des Streifens erstreckenden Wendekanal (2) umfasst, in den hinein der zu wendende Streifen geführt wird, und dass der Streifen (F) nach seinem Einführen in diesen Wendekanal (2) mit seinem anderen Ende voraus wieder aus diesem Wendekanal (2) herausgeführt und der weiteren Bearbeitung zugeführt wird.

2. Verfahren nach Anspruch 1, dadurch gekennzeichnet, dass der Streifen für den Fall, dass er nicht weiter bearbeitet wird, in den Wendekanal (2) geleitet und ausgeschieden wird.

3. Verfahren nach einem der Ansprüche 1 oder 2, dadurch gekennzeichnet, dass die Lage der Seite des Streifens, welche die beschichtete Oberfläche aufweist, mit Hilfe eines im Randbereich des Streifens vorgesehenen Bar-Codes, der gelesen wird, ermittelt wird.

4. Vorrichtung zur Bearbeitung von Streifen (F) eines fotografischen Bandmaterials, dessen eine Oberfläche zumindest teilweise beschichtet ist, bei welcher Vorrichtung Mittel zum Ermitteln der Lage der Seite mit der beschichteten Oberfläche vorgesehen sind, wobei in einem ersten Fall, in welchem die Lage der Seite mit der beschichteten Oberfläche der gewünschten Lage entspricht, der Streifen (F) unverändert der weiteren Bearbeitung zugeführt wird, und wobei in einem zweiten Fall, in welchem die Lage der Seite mit der beschichteten Oberfläche nicht der gewünschten Lage entspricht, der Streifen vor der weiteren Bearbeitung gewendet wird, dadurch gekennzeichnet, dass die Vorrichtung eine Weiche (3) und eine Wendeeinrichtung mit einem sich im wesentlichen entgegengesetzt zur Transportrichtung des Streifens erstreckenden Wendekanal (2) umfasst, in den hinein die Weiche (3) einen zu wendenden Streifen (F) mit seinem einen Ende voraus hineinführt und den Streifen anschliessend mit seinem anderen Ende voraus aus dem Wendekanal (2) heraus der weiteren Bearbeitung zuführt.

5. Vorrichtung nach Anspruch 4, dadurch gekennzeichnet, dass zum Transport des Streifens Walzenpaare (W1,W2,W3,W4,W5,W6,W7,W8) vorgesehen sind, zwischen denen der Streifen (F) hindurchgeführt ist, und dass zur Führung der Streifen Leitbleche (L1,L2,L3,L4,L5) vorgesehen sind, wobei die Weiche (3) ebenfalls Leitbleche (L3,L4) und ein Transportwalzenpaar (W7,W8) sowie eine Scheibe (30) umfasst, an der die Leitbleche (L3,L4) der Weiche (3) befestigt sind, und welche koaxial zur Drechachse (A7) einer Transportwalze (W7) des Transportwalzenpaars (W7,W8) der Weiche (3) angeordnet ist und mitsamt den an ihr befestigten Leitblechen (L3,L4) und mitsamt der anderen zu diesem Transportwalzenpaar (W7,W8) gehörenden Transportwalze (W8) um die Scheibenachse (A7) zwischen zwei Endpositionen drehbar ist, wobei in der ersten Endposition der Scheibe die Leitbleche (L3,L4) den Streifen (F) ungewendet weiterführen und in der zweiten Endposition die Leitbleche (L3,L4) den Streifen (F) in den Wendekanal (2) hinein führen.

6. Vorrichtung nach Anspruch 5, dadurch gekennzeichnet, dass ein weiteres Transportwalzenpaar (W9,W10) und ein weiteres Leitblech (L5) der Weiche (3) nachfolgend angeordnet sind, wobei dieses weitere Leitblech (L5) koaxial zur Drehachse einer Transportwalze (W9) dieses Transportwalzenpaars (W9,W10) zwischen zwei Endpositionen schwenkbar ist und in der ersten Endposition den von der Weiche (3) ungewendet kommenden Streifen (F) und in der zweiten Endposition den aus dem Wendekanal (2) kommenden Streifen (F) der weiteren Bearbeitung zuführt.

7. Vorrichtung nach einem der Ansprüche 4 bis 6, dadurch gekennzeichnet, dass in der Nähe des Einlasses (1) des Streifens (F) in die Vorrichtung am Seitenrand der Transportbahn Lesemittel (DX) vorgesehen sind, die anhand eines gelesenen Barcodes auf dem Seitenrand des Streifens (F) gegebenenfalls ein Wendesignal erzeugen und dieses an die Weiche (3) bzw. an die Antriebs- und Stellmotoren (M1,M2,MS) leiten.

8. Vorrichtung nach Anspruch 7, dadurch gekennzeichnet, dass in dem Fall, dass ein Streifen (F) nicht bearbeitet werden muss, die Lesemittel (DX) ein Ausscheidesignal erzeugen und dieses an die Weiche (3) bzw. an die Antriebs- und Stellmotoren (M1,M2,MS) leiten, die den Streifen (F) dann in den Wendekanal (2) zum Ausscheiden führt.

9. Vorrichtung nach einem der Ansprüche 4 bis 8, dadurch gekennzeichnet, dass direkt am Einlass (1) des Streifens Detektionsmittel (S1) angeordnet sind, die den eintretenden Streifen (F) detektieren und ein Antriebssignal für die Antriebsmotoren (M1,M2) der Transportwalzen (W1,W2,W3,W4,W5,W6,W7,W8) erzeugen.

## Claims

1. Process for the processing of strips (F) of a photographic tape material, one of whose surfaces is at least partially coated, by means of which process the position of the side with the coated surface is determined, the strip being advanced unchanged for further processing in a first case where the position of the side with the coated surface is the desired position, while the strip to be coated is turned over before any further processing in a second case where the position of the side with the coated surface is not the desired position, characterized in that in the second case the strip (F) which is to be turned over is guided with one end first into a turning station, which comprises a turning channel (2) running substantially in the opposite direction to the direction of transport and into which the strip to be turned over is guided, and that the strip (F) after being introduced into this turning channel (2) is guided out of this turning channel (2) with its other end first and advanced for further processing.

2. Process according to Claim 1, characterized in that in the event that the strip is not further processed, it is guided into the turning channel (2) and discharged.

3. Process according to one of Claims 1 or 2, characterized in that the position of the side of the strip which has the coated surface is established by reading a bar code provided in the margin of the strip.

4. Device for the processing of strips (F) of a photographic tape material, one surface of which is at least partially coated, in which device means are provided for establishing the position of the side with the coated surface, the strip being advanced unchanged for further processing in a first case where the position of the side with the coated surface is the desired position, while the strip to be coated is turned over before any further processing in a second case where the position of the side with the coated surface is not the desired position, characterized in that the device comprises a selector (3) and a turning device with a turning channel (2) running substantially in the opposite direction to the direction of transport for the strip, into which channel the selector (3) introduces a strip (F) that is to be turned over with its one end first, and then delivers the strip out of the turning channel for further processing with its other end first.

5. Device according to Claim 4, characterized in that pairs of rollers (W1, W2, W3, W4, W5, W6, W7, W8) are provided for the transport of the strip, between which the strip (F) is passed, and that for guiding the strip guide plates (L1, L2, L3, L4, L5) are provided, the selector (3) also comprising guide plates (L3, L4) and a pair of rollers (W7, W8) as well as a disc (30) to which the guide plates of the selector (3) are attached, and which is disposed coaxially to the axis of rotation (A7) of one transport roller (W7) of the pair of transport rollers (W7, W8) of the selector (3), and is rotatable together with the guide plates (L3, L4) attached to it and together with the other transport roller (W8) belonging to this pair of transport rollers (W7, W8) about the disc axis (A7) between two terminal positions, the guide plates (L3, L4) advancing the strip (F) without turning it in the first terminal position of the disc and introducing the strip (F) into the turning channel (2) in the second terminal position.

6. Device according to Claim 5, characterized in that a further pair of transport rollers (W9, W10) and a further guide plate (L5) of the selector (3) are arranged in series, this further guide plate (L5) being pivotable coaxially to the axis of rotation of a transport roller (W9) of this pair of transport rollers (W9, W10) between two terminal positions, and in the first terminal position advancing the strip (F) coming unturned from the selector (3) and in the second terminal position advancing the strip (F) coming from the turning channel (2) for further processing.

7. Device according to one of Claims 4 to 6, characterized in that in the vicinity of the intake (1) for the strip (F) entering the device reading means (DX) are provided at the side of the transport path, which, using a barcode scanned from the margin of the strip (F), generate when appropriate a turning signal and transmit this to the selector (3) or to the drive and servomotors (M1, M2, MS).

8. Device according to Claim 7, characterized in that in the event that a strip (F) does not have to be processed, the reading means (DX) produce a discharge signal and transmit this to the selector (3) and/or to the drive and servo motors (M1, M2, MS), which then guides the strip (F) into the turning channel (2) for discharge.

9. Device according to one of Claims 4 to 8, characterized in that directly at the intake (1) for the strip (F) detection means (S1) are placed, which identify the strip (F) as it enters and generate a drive signal for the drive motors (M1, M2) of the transport rollers (W1, W2, W3, W4, W5, W6, W7, W8).

## Revendications

1. Méthode de traitement de sections ou bouts (F) d'un ruban photographique, dont une surface est au moins partiellement enduite, procédé dans lequel la position, du côté ayant la surface enduite, est déterminée ou décelée, de sorte que, dans un premier cas, dans lequel la position du côté à surface enduite correspond à la position voulue, le ruban est acheminé sans modification vers la suite de son traitement et dans lequel, dans un second cas dans lequel la position du côté ayant une surface enduite ne correspond pas à la position voulue, le bout ou la section est retourné(e) avant la suite de son traitement, méthode caractérisée en ce que, dans le second cas, le bout (F) à retourner est acheminé et introduit par une de ses extrémités, au préalable, dans un poste de retournement englobant un conduit de retournement (2) s'étendant essentiellement dans la direction opposée du sens du transport du ruban et dans lequel le ruban à retourner est conduit et introduit et en ce que, après son introduction dans ce conduit de retournement (2), le bout (F) est retiré, par son autre extrémité, à nouveau et ce bout est acheminé vers la suite de son traitement.

2. Méthode selon la revendication 1, caractérisée en ce que, dans le cas où le bout n'est pas soumis à traitement ultérieur, ce bout est acheminé dans le conduit de retournement (2) et en est rejeté.

3. Méthode selon l'une des revendications 1 ou 2, caractérisée en ce que la position du côté du ruban représentant la surface enduite est décelée à l'aide d'un code barre prévu dans la zone marginale de ruban et qui est lu.

4. Dispositif pour le traitement de sections ou de bouts (F) d'un ruban photographique, dont une surface est au moins partiellement enduite, dispositif dans lequel on prévoit des moyens pour déceler la position du côté ayant une surface enduite, de sorte que, dans un premier cas, dans lequel la position du côté correspond à la position voulue de la surface enduite, le bout ou la section (F) est acheminé (e) sans modification vers la suite de son traitement et dans lequel, dans un second cas, dans lequel la position du côté à surface enduite ne correspond pas à la position voulue, le bout ou la section est, avant la suite de son traitement, retourné(e), dispositif caractérisé en ce qu'il comporte un aiguillage (3) et un appareillage de retournement comportant un conduit de retournement (2) s'étendant essentiellement dans le sens opposé à la direction du transport du bout, conduit dans lequel l'aiguillage (3) introduit par une de ses extrémités le bout (F) à retourner et fait ensuite sortir du conduit de retournement (2), par son autre extrémité, le bout de ruban et l'achemine vers la suite de son traitement.

5. Dispositif selon la revendication 4, caractérisé en ce que, pour le transport du bout on prévoit des paires de cylindres (W1, W2, W3, W4, W5, W6, W7, W8) entre lesquelles le bout (F) est introduit et acheminé et en ce que, pour guider le bout, on prévoit des tôles de guidage (L1, L2, L3, L4, L5), l'aiguillage (3) comportant également des tôles de guidage (L3, L4) et une paire (W7, W8) de cylindres de transport ainsi qu'un disque (30) auquel sont fixées les tôles (L3, L4) de guidage faisant partie de l'aiguillage (3), et qui sont disposées coaxialement à l'axe de rotation (A7) d'un cylindre transporteur (W7) de la paire des cylindres transporteurs (W7, W8) faisant partie de l'aiguillage (3), et qui peut tourner avec les tôles (L3, L4) de guidage qui lui sont fixées et avec l'autre cylindre (W8) transporteur appartenant à cette paire (W7, W8) de cylindres transporteurs autour de l'axe du disque (A7) entre deux positions extrêmes, et, dans une première position extrême du disque, les tôles de guidage (L3, L4) continuent à acheminer sans retournement les bouts (F) et, dans la seconde position extrême, les tôles de guidage (L3, L4) conduisent le bout (F) pour l'introduire dans le conduit de retournement (2).

6. Dispositif selon la revendication 5, caractérisé en ce qu'une autre paire de cylindres transporteurs (W9,W10) et une autre tôle (L5) de guidage appartenant à l'aiguillage (3) sont disposées en aval, cette autre tôle de guidage (L5) pouvant pivoter, coaxialement à l'axe de rotation d'un cylindre transporteur (W9) de cette paire de cylindres transporteurs (W9, W10), entre deux positions extrêmes et, dans l'une des positions extrêmes, le bout (F) arrivant, non retourné, de l'aiguillage (3) et, dans la seconde position extrême, le bout (F) provenant du conduit de retournement (2) est acheminé vers la suite de son traitement.

7. Dispositif selon l'une des revendications 4 à 6, caractérisé en ce que, au voisinage de l'entrée (1) du bout ou de la section (F) dans le dispositif, sont prévus sur le bord latéral du circuit de transport des moyens de lecture (DX) qui, en tenant compte d'un code barre lu, présent sur le bord latéral du bout (F), produisent éventuellement un signal de retournement et acheminent ce signal à l'aiguillage (3) ou aux moteurs (M1, M2, MS) d'entraînement et de positionnement.

8. Dispositif selon la revendication 7, caractérisé en ce que, au cas où un bout (F) ne doit pas être traité, les moyens de lecture (DX) émettent un signal de sortie et de séparation et conduisent ce signal à l'aiguillage (3) ou aux moteurs (M1, M2, MS) d'entraînement et de positionnement, ce qui achemine les bouts (F) présents dans le conduit de retournement (2) vers leur exclusion.

9. Dispositif selon l'une des revendications 4 à 8, caractérisé en ce que, directement sur l'entrée (1) du bout, sont disposés des moyens de détection (S1) qui détectent le bout (F) qui entre et produisent un signal d'entraînement destiné aux moteurs d'entraînement (M1, M2) des cylindres transporteurs (W1, W2, W3, W4, W5, W6, W7, W8).
